# EUROPÄISCHE PATENTSCHRIFT

(11) **EP 0 764 835 B1**
(45) Veröffentlichungstag und Bekanntmachung des Hinweises auf die Patenterteilung: **24.05.2000**
(21) Anmeldenummer: 96114698.2
(22) Anmeldetag: 13.09.1996
(51) Int. Cl.: G01F 23/74

(54) **Niveaumessvorrichtung zum Messen des Füllstandes von Behältern**
Apparatus for measuring the filling level in a container
Dispositif de mesure du niveau de remplissage de réservoirs

(30) Priorität: 21.09.1995 DE 19535011
(43) Veröffentlichungstag der Anmeldung: 26.03.1997
(73) Patentinhaber: Kübler, Heinrich, Dr., 69439 Zwingenberg (DE)
(72) Erfinder: Kübler, Heinrich, Dr., 69439 Zwingenberg (DE)
(74) Vertreter: Clemens, Gerhard, Dr.-Ing.

(56) Entgegenhaltungen:
- WO-A-96/35928
- DE-A- 3 433 061
- DE-U- 9 416 008

## Beschreibung

### TECHNISCHES GEBIET

Die vorliegende Erfindung betrifft eine Niveaumeßvorrichtung zum Messen des Füllstandes von Behältern, die mit flüssigem oder flüssigkeitsähnlichen Medien gefüllt sind, mit einer Bypassrohreinheit, die mit dem Inneren des Behältnis kommunizierend in Verbindung steht mit einer in der Bypassrohreinheit gleitend vorhandener Schwimmereinheit mit einem Permanentmagneten, einer Magnet-Niveauanzeige mit von dem Permanentmagneten beeinflußbaren drehbaren Magnetrollen, einer Meßwertgebereinheit für das Niveau des Mediums, gegebenenfalls zumindest einer Magnetschaltereinheit und einer U-Profileinheit, die bevorzugt stegaußenseitig an der Bypassrohreinheit befestigt ist und in deren Profilinnenraum, d.h. Raum zwischen den gegenüberliegenden Flanschinnenseiten der U-Profileinheit, die Magnetrollen kontinuierlich in Längsrichtung der U-Profileinheit gelagert sind, wobei die U-Profileinheit zumindest an einer ihrer Flanschaußenseiten eine Anschlußeinheit zum Anschließen der Meßwertgebereinheit und/oder der Magnetschaltereinheit besitzt.

Derartige Meßvorrichtungen werden in einem vielfältigen Spektrum eingesetzt. So ist der Anlagenbau ein wesentliches Einsatzgebiet derartiger Meßvorrichtungen. Die Schwimmereinheit schwimmt in dem Medium, das in der Bypassrohreinheit vorhanden ist, wobei deren Höhenlage in ein korrespondierendes Signal umgewandelt wird. Weiterhin zeigt die Magnet-Niveauanzeige die jeweilige Füllstandshöhe vor Ort an. Es wird erwartet, daß die Meßvorrichtungen dauerhaft zuverlässig funktionieren und darüberhinaus wirtschaftlich herstellbar und einfach montierbar sind.

### STAND DER TECHNIK

Aus der De-A-34 33 061 sind Meßvorrichtungen bekannt, die einen Meßwertgeber aufweisen, der als Meßwertaufnehmer zur Füllstandsfernmessung von Flüssigkeiten in Verbindung mit Meßwertumformern dient. Derartige Meßwertgeber arbeiten nach dem Schwimmerprinzip mit magnetischer Übertragung, wobei innerhalb des Schwimmers ein Permanentmagnet angeordnet ist, der innerhalb der Meßwertgebereinheit vorhandene in Reihe geschaltete Reed-Schalter und Widerstandsmeßketten mit magnetischen Kräften beaufschlagt und dadurch ein Signal erzeugt wird, das nach Auswertung zur Anzeige der Füllstandshöhe verwendet werden kann. Derartige Meßvorrichtungen haben den Vorteil, daß lediglich ein bewegliches Bauteil, nämlich eine im Inneren der Bypassrohreinheit gleitend angeordnete Schwimmereinheit vorhanden ist, die zuverlässig je nach Füllstandshöhe an der Bypassrohreinheit auf und ab gleitet und ihr entsprechendes mit der Füllstandshöhe korrespondierendes Signal abgibt. Ein in der Schwimmereinheit eingelegter Ringmagnet betätigt mit seinem Magnetfeld durch die Wandung der Bypassrohreinheit und der Meßwertgebereinheit hindurch sehr kleine Reed-Kontakte, die an einer Widerstandsmeßkette (Spannungsteiler) eine Meßspannung unterbrechungslos abgreifen, die der Höhe des Füllstandes proportional ist. Die Widerstandsmeßkette ist sehr feinstufig und ist bevorzugt als kleine Chipeinheit ausgebildet. Aufgrund dieses Aufbaus ist die abgegebene Meßspannung quasi kontinuierlich. Dadurch lassen sich sehr zuverlässig und exakt Füllstandshöhen messen und anzeigen.

In dem Gebrauchsmuster DE-U-94 16 008 ist eine Niveaumeßvorrichtung offenbart, bei der eine U-Profileinheit eingesetzt wird, die an ihren Flanschaußenseiten eine von oben bis unten durchgehende T-förmige Nut aufweist, in die die Meßwertgebereinheit beziehungsweise die Magnetschaltereinheit eingeführt werden kann, wobei die genannten Einheiten zu diesem Zweck eine T-förmige durchgehende Vorsprungseinheit an ihrem Gehäuse aufweisen.

### DARSTELLUNG DER ERFINDUNG

Der vorliegenden Erfindung liegt, ausgehend von dem genannten Stand der Technik, die Aufgabe bzw. das technische Problem zugrunde, wirtschaftlich herstellbare und zuverlässig funktionierende Meßvorrichtungen anzugeben, die eine einfache und flexible Montage bzw. Herstellung gewährleisten.

Die erfindungsgemäße Messvorrichtung einer ersten Variante ist durch die Merkmale des unabhängigen Anspruchs 1 gegeben. Die erfindungsgemäße Messvorrichtung einer zweiten Variante ist durch Merkmale des unabhängigen Anspruchs 2 gegeben. Vorteilhafte Ausgestaltungen und Weiterbildungen sind Gegenstand der abhängigen Ansprüche.

Die erfindungsgemäße erste Variante zeichnet sich demgemäß dadurch aus, dass Befestigungseinheiten für die Messwertgebereinheit und die Magnetschaltereinheit vorhanden sind, die eine Anordnung der Messwertgebereinheit und der Magnetschaltereinheit mit unterschiedlichem Abstand zur Bypassrohreinheit erlauben, im Extremfall bis an die Wandung der Bypassrohreinheit, wobei der Anschluss der Befestigungseinheiten an die Nuteinheit mittels einer Nutenstein-Schraubverbindung erfolgt und die Befestigungseinheiten eine durchgehende Bohrung zum Einführen einer Befestigungsschraube aufweist.

Die erfindungsgemäße Messvorrichtung gemäß der zweiten Variante zeichnet sich demgemäß dadurch aus, dass Befestigungseinheiten für die Magnetschaltereinheit vorhanden sind, die eine Anordnung der Magnetschaltereinheit mit unterschiedlichem Abstand zur Bypassrohreinheit erlauben, im Extremfall bis an die Wandung der Bypassrohreinheit, wobei der Anschluss der Befestigungseinheiten an die Nuteinheit mittels einer Nutenstein-Schraubverbindung erfolgt und die Befestigungseinheiten eine durchgehende Bohrung zum Einführen einer Befestigungsschraube aufweist, die Messwertgebereinheit mit ihrer Messkette zumindest teilweise direkt innerhalb der Nuteinheit angeordnet ist, die Messkette von einer Umhüllungseinheit, insbesondere Schrumpfschlaucheinheit umhüllt ist und/oder die nach außen offene durchgehende Nuteinheit mittels einer Abdeckeinheit verschlossen ist.

Insbesondere die erfindungsgemäße, alternative Ausgestaltung der Niveaumeßvorrichtung mit einer direkten, innerhalb der Anschlußeinheit gelagerten Meßwertgebereinheit bietet große Vorteile hinsichtlich Herstellung, Zuverlässigkeit und Wartungsfreundlichkeit. Die bisher erforderlichen Anschlußbauteile für die Meßwertgebereinheit können gänzlich entfallen. Insbesondere durch das erfindungsgemäße Anordnen der Meßkette (Reedkontakte, Widerstände) der Meßwertgebereinheit innerhalb der Nut, ergeben sich somit große wirtschaftliche Vorteile.

Eine besonders bevorzugte Ausgestaltung der erfindungsgemäßen Übermeßvorichtung zeichnet sich dadurch aus, daß die Befestigungseinheit eine durchgehende Ausnehmung zur Aufnahme der Magnetschalter oder zur Lagerung der Meßwertgebereinheit besitzt. Bei der Lagerung der Meßwertgebereinheit sind die Befestigungseinheiten bevorzugt in deren Endreiche in der Anschlußeinrichtung angeschlossen. Bei besonders langen Meßwertgebereinheiten kommt erfindungsgemäß bevorzugt eine Spannbandeinheit zum Einsatz, die um die Bypasseinheit herumgeführt ist und in der Anschlußeinrichtung beidseits der U-Profileinheit verankert ist. Zu Verankerungszwecken werden hierzu auch bevorzugt Nutensteine eingesetzt, an die die Spannbandeinheit angeschraubt ist.

Hinsichtlich einer einfachen Herstellung besonders bevorzugte Ausgestaltung zeichnet sich dadurch aus, daß die Befestigungseinheit zwar zunächst eine durchgehende Ausnehmung aufweist, diese Ausnehmung jedoch in einem Endbereich bevorzugt durch einen Verschlußstopfen verschlossen wird, so daß eine Sacklochöffnung entsteht. In diese Sacklochöffnung wird nun eine Magnetschaltereinheit eingebracht und anschließend vergossen. Daran anschließend wird ein Anschlußkopf in das endseitig vorhandene Innengewinde der Ausnehmung eingeschraubt.

In einer besonders bevorzugten Ausgestaltung weist eine Magnetschaltereinheit ein bistabiles Schaltverhalten auf. Derartige Magnetschalter lassen sich mit einem relativ großem Abstand zum Magneten im Zylinderschwimmer betätigen. Die in der Meßwertgebereinheit vorhandenen monostabilen Kontakte benötigen ein stärkeres Magnetfeld. Zum Schließen sollen diese daher möglichst nahe am Bypassrohr befestigt werden. Dies wird erfindungsgemäß dadurch ermöglicht, daß bevorzugt zwischen der Befestigungseinheit eine zweite Befestigungseinheit zwischengeschaltet wird, die in einer besonders einfachen konstruktiven Ausgestaltung einen L-förmigen Querschnitt aufweist. Dadurch kann die Meßwertgebereinheit praktisch bis direkt zur Außenwandung des Bypassrohres herangeführt werden, so daß übliche Zylinderschwimmermagnete eingesetzt werden können.

Um einen zuverlässigen Schutz der Meßkette gegen Beschädigung zu gewährleisten, ist nach einer besonders vorteilhaften Ausgestaltung der erfindungsgemäßen Niveaumeßvorrichtung, die nach außen offene durchgehende Nut mittels einer Abdeckeinheit verschlossen. Diese Abdeckeinheit kann problemlos von außen angebracht werden und schützt die Meßkette vor mechanischer Beschädigung und Umwelteinflüssen.

Weitere Ausführungsformen und Vorteile der Erfindung ergeben sich durch die in den Ansprüchen ferner aufgeführten Merkmale, sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildung derselben werden im folgenden anhand der in der Zeichnung dargestellten Beispiele näher beschrieben und erläutert. Die der Beschreibung zu entnehmenden Merkmale können einzeln für sich oder zu mehreren in beliebiger Kombination erfindungsgemäß angewandt werden. Es zeigen:
- Fig. 1: schematische Detailseitenansicht und Detaillängsschnitt einer Meßvorrichtung mit an eine U-Profileinheit angeschlossene Magnetschaltereinheit und Meßwertgebereinheit,
- Fig. 2: schematische Vorderansicht der Vorrichtung gemäß Fig. 1,
- Fig. 3,4,5,6: schematischer Querschnitt einer Meßvorrichtung mit U-Profileinheit und verschiedenen Befestigungseinheiten für die Magnetschaltereinheit und die Meßwertgebereinheit,
- Fig. 7: schematischer Querschnitt durch eine Meßvorrichtung mit einer zusätzlichen als Spannbandeinrichtung ausgebildeten Halterung,
- Fig. 8: schematische Seitenansicht einer Verbindung der U-Profileinheit mit der Bypassrohreinheit,
- Fig. 9: schematische Stirnansicht der Verbindung gemäß Fig. 8,
- Fig. 10: schematische Teildarstellung einer in der U-Profileinheit vorhandenen Zahnschiene zur Lagerung der Magnetrollen,
- Fig. 11: schematischer Längsschnitt durch eine Magnetschalteinheit mit bistabilen Schaltverhalten,
- Fig. 12: schematische Ansicht einer Befestigungseinheit, die zur Aufnahme eines Magnetschalters geeignet ist,
- Fig. 13: schematischer Querschnitt durch eine Befestigungseinheit gemäß Fig. 12,
- Fig. 14: schematische Detailvorderansicht einer U-Profileinheit, mit innerhalb einer Nuteinheit angeordneter Meßkette einer Meßwertgebereinheit,
- Fig. 15: schematische Detailseitenansicht der U-Profileinheit gemäß Fig. 14,
- Fig. 16: Schnitt der Profileinheit gemäß Fig. 14, entlang Schnittführung A-A und
- Fig. 17 a), b): schematische Darstellung der Meßkette in einer Detailseitenansicht und Detaildraufsicht.

### WEGE ZUM AUSFÜHREN DER ERFINDUNG

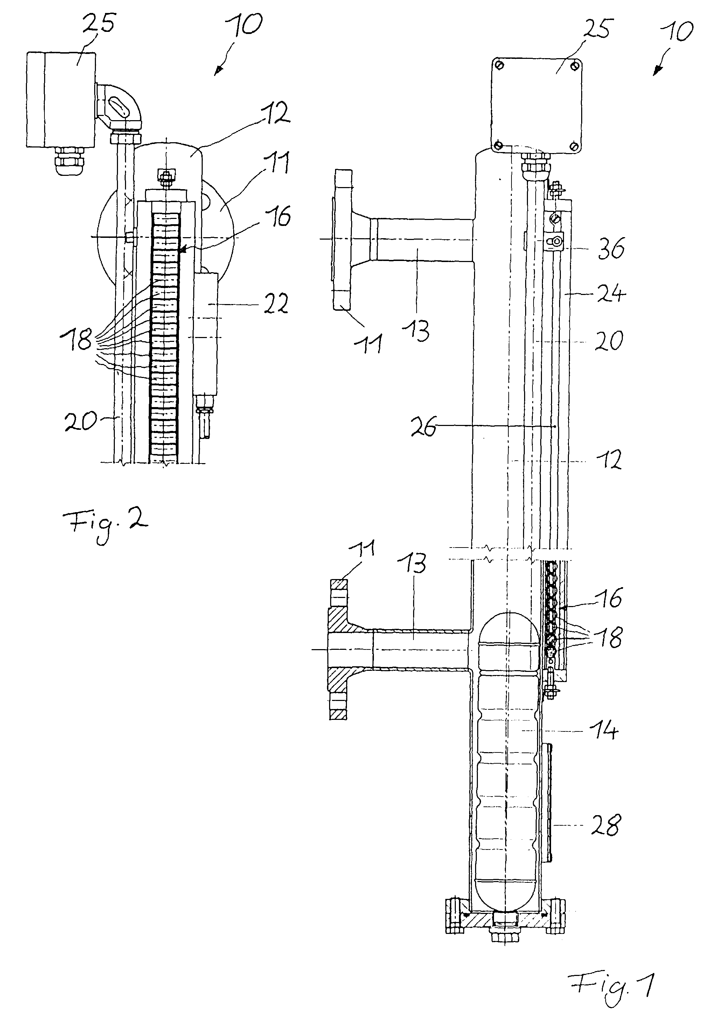

Gemäß Fig. 1 ist eine Meßvorrichtung 10 mittels beabstandet zueinander angeordneten Vorschweißflansche 11 an ein nicht dargestelltes Behältnis angeschlossen. An die Vorschweißflansche 11 schließt jeweils ein Anschlußrohr 13 an, welches an ein senkrecht dazu langgestreckt verlaufendes Längsrohr angehalst ist und zusammen mit diesem die Bypassrohreinheit 12 bildet. Die Bypassrohreinheit 12 steht somit kommunizierend mit dem Inneren des Behältnisses in Verbindung. Innerhalb der Bypassrohreinheit 12 ist eine Schwimmereinheit 14 vorhanden, die einen nicht näher dargestellten Permanentmagneten beinhaltet. Abhängig von dem Füllstandsniveau im Behältnis hebt oder senkt sich die Schwimmereinheit 14 in der Bypassrohreiheit 12, da es ihr möglich ist, sich innerhalb der Bypassrohreinheit 12 zu heben oder zu senken. Auf der den Vorschweißflanschen 11 gegenüberliegenden Seite der Bypassrohreinheit 12 ist auf dieser eine U-Profileinheit 24 befestigt.

In der weiter unten näher beschriebenen U-Profileinheit 24 sind eng übereinander drehbar gelagerte Magnetrollen 18 einer Magnet-Niveauanzeige 16 angeordnet, die von dem Magneten der Schwimmereinheit 14 beeinflußt werden und die Füllstandshöhe optisch nach außen vor Ort anzeigen.

Auf beiden Flanschaußenseiten besitzt die U-Profileinheit 24 eine Anschlußeinrichtung 26, die im Ausführungsbeispiel als durchlaufende T-förmige Nuteinheit 26 ausgebildet ist.

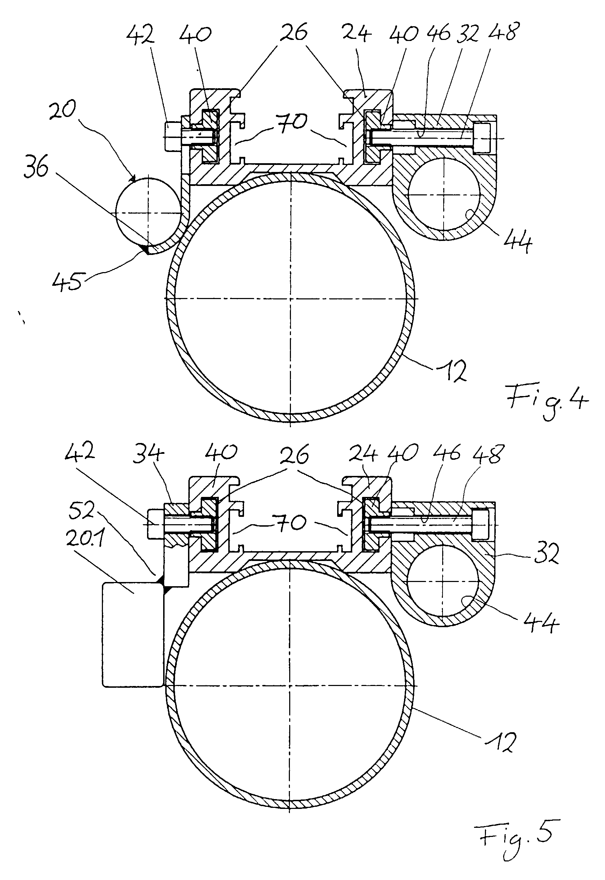

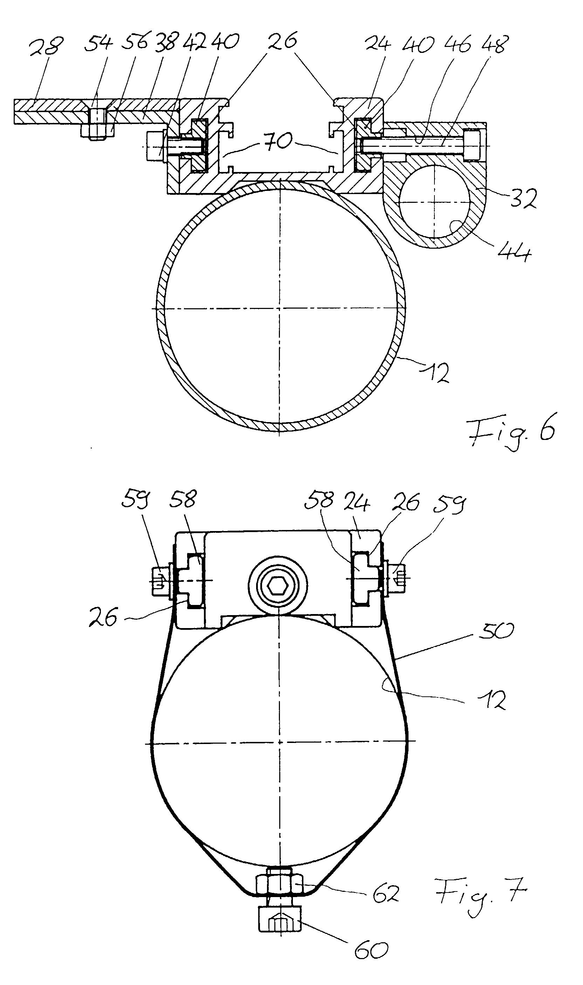

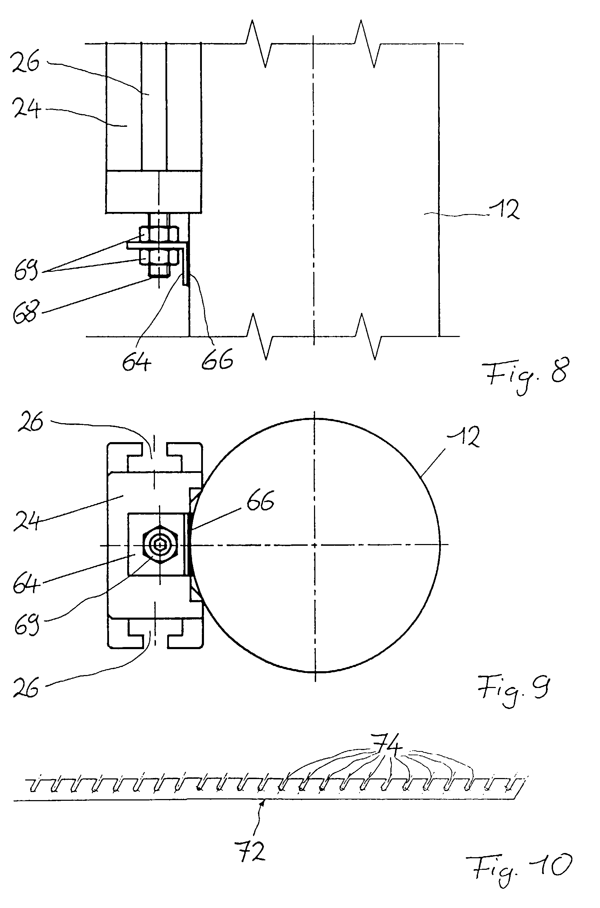

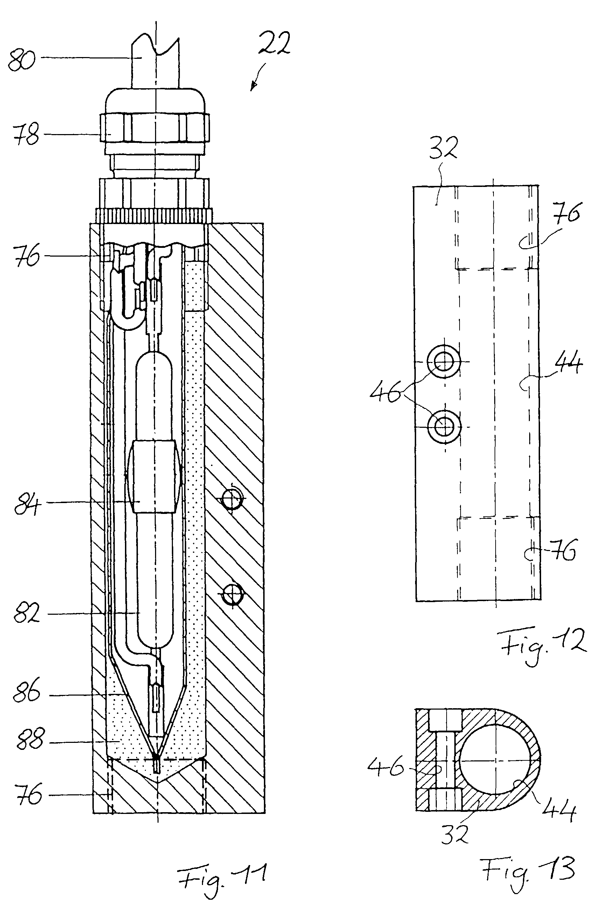

Die ebenfalls parallel zur Bypassrohreinheit 12 verlaufende Meßwertgebereinheit 20 ist in Fig. 1 jeweils in ihrem Endbereich an eine Befestigungseinheit 36 angeschlossen, die in Fig. 4 näher dargestellt ist. Die Meßwertgebereinheit 20 besteht aus einem Edelstahlrohr, innerhalb dessen in Reihe geschaltete Reed-Schalter und Widerstandsmeßketten vorhanden sind, die mit magnetischen Kräften beaufschlagt werden. Dadurch wird ein Signal erzeugt, daß nach Verarbeitung und Auswertung durch eine Auswerteinheit 25 zur Fernanzeige der Füllstandshöhe verwendet werden kann. Die Funktionsweise ist bereits in der Beschreibungseinleitung beschrieben.

Im oberen Endbereich der Meßvorrichtung 10 ist gemäß Fig. 2 schematisch eine Magnetschaltereinheit 22 vorhanden, die auf der der Meßwertgebereinheit 20 gegenüberliegenden Seite in der Anschlußeinrichtung (Nuteinheit 26) verankert ist.

Schließlich ist im unteren Endbereich der Meßvorrichtung 10 gemäß Fig. 1 noch ein Typenschild 28 vorhanden, daß ebenfalls über ein Lagerelement in der Nuteinheit 26 verankert ist.

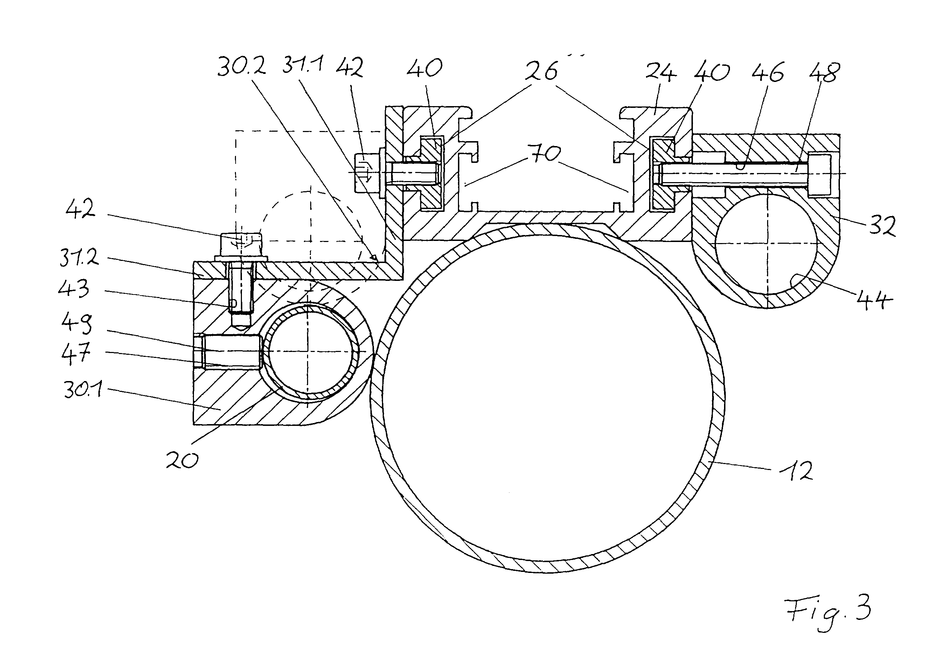

In den Figuren 3 bis 6 sind unterschiedlichste Ausbildungen von Befestigungseinheiten dargestellt. Gleiche Bauteile tragen das gleiche Bezugszeichen und werden nicht bei jeder Figur nochmals erläutert.

Gemäß Fig. 3 ist im rechten Bereich eine Befestigungseinheit 32 vorhanden, die eine kreisrunde Ausnehmung 44 besitzt, innerhalb derer beispielsweise eine Magnetschaltereinheit 22 angeordnet sein kann. Schließlich besitzt die Befestigungseinheit 32 eine oder mehrere Stufenbohrungen 46, in die eine Befestigungsschraube 48 eingeführt werden kann. Die Befestigungsschraube 48 wird zur Befestigung der Befestigungseinheit 32 an der U-Profileinheit 24 in ein Innengewinde eines in der Nuteinheit 26 angeordneten Nutsteins 40 eingedreht.

Am gegenüberliegenden Flansch der U-Profileinheit 24 ist in die Nuteinheit 26 ebenfalls ein Nutenstein 40 eingeführt. Über eine Befestigungsschraube 42 ist an einem Schenkel 31.1 eine im wesentlichen L-förmig ausgebildete Befestigungseinheit 30.2 an dem Nutenstein 40 befestigt. Am anderen Schenkel 31.2 ist in Fig. 3 nach unten weisend mittels einer Befestigungsschraube 42 eine Befestigungseinheit 30.1 angeschlossen, die hierzu eine Sacklochbohrung 43 mit Innengewinde besitzt, in die die Befestigungsschraube 42 eingedreht ist. Die Außenkontur der Befestigungseinheit 30.1 entspricht im wesentlichen der der Befestigungseinheit 30.2 mit derselben Ausnehmung 44. In die durchgehende Ausführung 44 ist die im Ausführungsbeispiel ein Edelstahlrohre aufweisende Meßwertgebereinheit 20 eingeführt. Das Innenleben der Meßwertgebereinheit 20 ist in Fig. 3 nicht dargestellt. Durch die Zwischenschaltung der zweiten Befestigungseinheit 30.2 ist es möglich, die Meßwertgebereinheit 20 so nahe wie möglich an die Bypassrohreinheit 12 und damit an die Schwimmereinheit 14 heranzubringen, so daß ein normaler Permanentmagnet innerhalb der Schwimmereinheit 14 eingesetzt werden kann. Zur Fixierung der Position der Befestigungseinheit 30.1 an der Messwertgebereinheit 20 ist in eine bis zur Ausnehmung 44 durchstoßende Ausnehmung 47 eine Arretierschraube 49 eingeschraubt.

In Fig. 3 ist im linken Bereich noch gestrichelt die Position der Befestigungseinheit 32 angegeben, falls eine symmetrische Ausbildung gewünscht ist.

Die in Fig. 1 verwendete Befestigungseinheit 36 ist im Detail in Fig. 4 näher dargestellt. Dabei ist die Befestigungseinheit 36 über die Befestigungsschraube 42 in Verbindung mit dem in die Nuteinheit 26 eingeführten Nutenstein 40 an der U-Profileinheit 24 angeschlossen. Im freien abstehenden Endbereich weist sie eine im wesentlichen viertel kreisförmige Krümmung nach außen auf. In diesem Bereich ist das Edelstahlrohr der Meßwertgebereinheit 20 in die konvexe Seite eingelegt und mittels einer Schweißnaht 45 an die Befestigungseinheit 36 angeschlossen.

Bei der Ausführung gemäß Fig. 5 ist im linken Bereich als Befestigungseinheit 34 ein rechteckförmiges Halteblech vorhanden, an das über Eck ein Rechteckrohr einer Meßwertgebereinheit 20.1 mittels einer Schweißnaht 52 angeschweißt ist.

In Fig. 6 ist ebenfalls im linken Bereich der U-Profileinheit 24 eine mit ihrer freien Schenkelaußenseite nach oben weisende L-förmige Befestigungseinheit 38 mittels einer Befestigungsschraube 42 und einem Nutenstein 46 in der Nuteinheit 26 angeschlossen. Oberseitig ist auf den abstehenden Winkelsteg der Lagereinheit 38 ein Typenschild 28 mittels einer Zylinderschraube 54 in Verbindung mit einer Sechskantmutter 56 angeschlossen.

In Fig. 7 ist schematisch eine Spannbandeinheit 50 zur Befestigung der U-Profileinheit 24 an der Bypassrohreinheit 12 dargestellt. Hierzu ist die Spannbandeinheit 50 um die Bypassrohreinheit 12 herumgeführt, um zu beiden Seiten der U-Profileinheit 24 in deren Nuteinheit 26 mittels jeweils einem eingeführten Nutenstein 58 und einer Befestigungsschraube 59 angeschlossen zu sein. Zum Spannen der Spannbandeinheit 50 dient eine der U-Profileinheit 24 gegenüberliegend angeordnete Zylinderschraube 60 mit Schraubenmutter 62, wobei die Spannbandeinheit 50 auf der dem Schraubenkopf der Zylinderschraube 60 zugewandten Stirnfläche der Schraubenmutter 62 anliegt.

In den Figuren 8 und 9 ist die stirnendseitige Verankerung der U-Profileinheit 24 an der Bypassrohreinheit 12 dargestellt. Hierzu ist ein L-förmiges Querschnittselement 64 mittels einer Schweißnaht 66 an der Bypassrohreinheit 12 angeschlossen. Im freien abstehenden Winkel des Querschnittselement 64 ist eine Bohrung vorhanden, durch die hindurch ein an der U-Profileinheit 24 befestigter Gewindestift 68 hindurchgeführt ist. Auf beiden Seiten des freien Schenkels des L-förmigen Querschnittselements 64 ist jeweils eine Sechskantmutter 69 zur Lagerfixierung vorhanden.

In Fig. 10 ist systematisch eine Zahnschiene 72 mit zu einer Seite hin offenen schräg angeordneten Ausnehmungen 74 vorhanden, die in die Fig. 3 mit dem Bezugszeichen 70 versehene an den Flanschinnenseiten der U-Profileinheit 24 vorhandenen T-förmigen Nuteinheiten 70 eingeführt werden. Die Zahnschiene 72 dient mit ihren Ausnehmungen 74 als Drehlagerung für die im Inneren der U-Profileinheit 24 angeordneten Magnetrollen 18. Sie erleichtert das manuelle Einführen der Magnetrollen 18 in das Innere der U-Profileinheit 24 deutlich.

In den Figuren 11-13 ist systematisch die Befestigungseinheit 32 für die Magnetschaltereinheit 22 dargestellt. Zum Herstellen dieser Magnetschaltereinheit 22, die integriert in der Befestigungseinheit 32 vorhanden ist, wird die Ausnehmung 44 im jeweiligen Endbereich mit einem Innengewinde 76 versehen. Ein Endbereich wird mittels eines nicht dargestellten Verschlußstopfens, der in das Innengewinde 76 eingedreht wird, verschlossen. Von der noch offenen Seite her wird die Magnetschaltereinheit 22 in das dann vorhandene Sackloch eingebracht und vergossen. Schließlich wird in das noch freie Innengewinde 76 eine Kopfeinheit 78 der Magnetschaltereinheit 22 mit den entsprechenden leitungsmäßig vorhandenen Anschlußleitungen 80 eingeschraubt.

Im Inneren der Magnetschaltereinheit 22 ist ein Reedkontakt 82 vorhanden, der von dem Magnetfeld des Magneten der Schwimmer-einheit beaufschlagt wird. Darüber hinaus ist weiterhin ein Rechteckmagnet 84 über dem Reedkontakt 82 vorhanden. Der Reedkontakt ist schaltungsmäßig in nicht näher dargestellten Art und Weise mit einem Widerstand gekoppelt. Das Innere der Magnetschalteinrichtung 22 ist von einem Schrumpfschlauch 86 umgeben und der Zwischenraum zwischen Ausnehmung 44 und Schrumpfschlauch 86 mit Silikonmasse 88 mit Vernetzer vergossen.

Die in Fig. 11 dargestellte Magnetschaltereinheit 22, die wie oben beschrieben in der T-Nuteinheit problemlos befestigt werden kann, zeigt ein bistabiles Schalterverhalten. Parallel zum Reedkontakt 82 ist der Rechteckdauermagnet 84 vorhanden. Der Dauermagnet 84 ist so schwach, daß er den Kontakt 82 nicht schließen kann. Wenn sich aber dem Dauermagnet 84 zum Beispiel der Nordpol des Magneten im Zylinderschwimmer nähert, schließt dieser den Kontakt 82. Bei geschlossenem Kontakt ist der Luftspalt zwischen den Kontaktzungen gleich null. Das Magnetfeld des Dauermagneten am Kontakt des Dauermagneten 84 am Kontakt 82 ist jetzt ausreichend stark genug, um den geschlossenen Kontakt geschlossen zu halten, wenn sich der Zylinderschwimmer weiter nach oben bewegt, bzw. sich entfernt. Wenn der Zylinder sich nach unten bewegt, öffnet sein Magnet mit seinem Südpol den Kontakt 82 wieder.

Derartige bistabile Magnetschaltereinheiten lassen sich mit einem relativen großen Abstand zum Magneten im Zylinderschwimmer betätigen. Daher können vereinfacht ausgebildete Befestigungseinheiten verwendet werden. Anzubauende Meßwertgebereinheiten, die einen monostabilen Kontakt aufweisen, benötigen ein stärkeres Magnetfeld zum Schließen und können erfindungsgemäß näher an der Bypassrohreinheit durch entsprechende Ausbildung der Befestigungseinheiten angeordnet werden.

Insgesamt ermöglicht die erfindungsgemäße Meßvorrichtung eine flexible Montage der jeweiligen Bauteile wie Magnetschaltereinheit, Meßwertgebereinheit, Typenschild und dergleichen mehr in standardisierter Art und Weise durch Einsatz von Nutensteinsystemen mit Befestigungseinheiten, die jederzeit auch vor Ort den jeweiligen Gegebenheiten angepaßt werden können. Insbesondere ist eine einfache Anwendung oder Wartung gegeben. Die erfindungsgemäße Meßvorrichtung ermöglicht ein hohes Maß an Flexibilität, vereinfacht in starkem Maße die Montage und Fertigung und Gewährleistet darüber hinaus in zuverlässiger Art und Weise dauerhaft exakte Meßdaten.

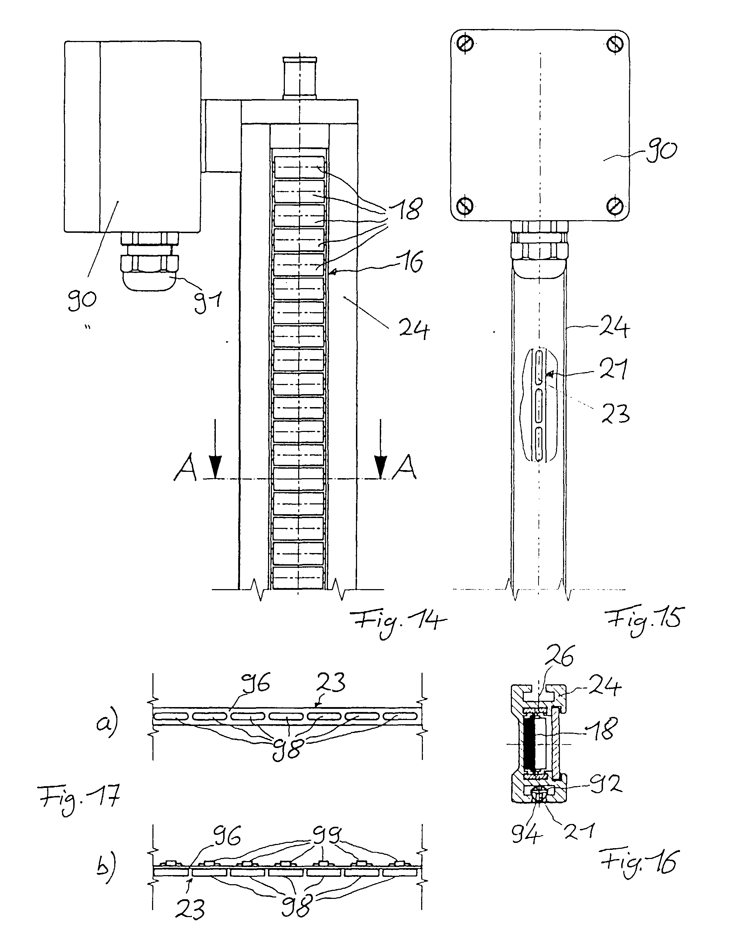

Eine besonders vorteilhafte Ausgestaltung der erfindungsgemäßen Niveaumeßvorrichtung ist in den Figuren 14, 15 und 16 dargestellt. Der Übersichtlichkeit halber ist die Bypassrohreinheit mit Schwimmereinheit nicht dargestellt. Gleiche Bauteile tragen das gleiche Bezugszeichen und werden nicht noch einmal erläutert. Bei der dargestellten bevorzugten Ausführungsvariante ist innerhalb einer Nuteinheit 26 die Meßkette 23 einer Meßwertgebereinheit 21 angeordnet, die eine Leiterplatte 96 besitzt, auf der auf der einen Seite Reed-Kontakte 98 und entsprechend auf der gegenüberliegenden Seite Widerstände 99 angeordnet sind, um den Spannungsabfall in ein Signal zu der korrespondierenden Füllstandshöhe umzuwandeln. Am oberseitigen Endbereich der U-Profileinheit 24 ist ein Anschlußgehäuse 90 vorhanden, daß auch als Anschlußsteckgehäuse ausgebildet sein kann. An dem Anschlußgehäuse 90 ist eine Anschlußeinheit 91 vorhanden, an die entsprechende Signalübertragungsleitungen angeschlossen werden können, um die gemessenen Signale einer nicht dargestellten Auswerteinheit zuzuführen.

Die Meßkette 23 ist erfindungsgemäß von einer Schrumpfschlaucheinheit 92 umgeben, so daß sie vor direkter Verschmutzung geschützt ist. Als zusätzliche Sicherungsmaßnahme ist die außenseitige Öffnung der Nuteinheit 26 mittels einer Abdeckeinheit 94 abgedeckt, so daß die Meßkette 23 vor mechanischen Beschädigungen und sonstigen Umwelteinflüssen zuverlässig geschützt ist. Durch die oben beschriebene Niveaumeßvorrichtung ist ein variables System gegeben, daß den jeweiligen Erfordernissen problemlos angepaßt werden kann. Eine dauerhaft zuverlässige Anzeige wird neben einer wirtschaftlichen Herstellung und Montage gewährleistet.

## Patentansprüche

1. Niveaumessvorrichtung (10) zum Messen des Füllstandes von Behältern, die mit flüssigem oder flüssigkeitsähnlichen Medien gefüllt sind, mit
- einer Bypassrohreinheit (12), die mit dem Inneren des Behältnisses kommunizierend in Verbindung steht,
- einer in der Bypassrohreinheit (12) gleitend vorhandener Schwimmereinheit (14) mit einem Permanentmagneten,
- einer Magnet-Niveauanzeige (16) mit von dem Permanentmagneten beeinflussbaren drehbaren Magnetrollen (18),
- einer Messwertgebereinheit (20) für das Niveau des Mediums,
- zumindest einer Magnetschaltereinheit (22) und
- einer U-Profileinheit (24), die an der Bypassrohreinheit (12) befestigt ist und in deren Profilinnenraum, d.h. Raum zwischen den gegenüberliegenden Flanschinnenseiten der U-Profileinheit (24), die Magnetrollen (18) kontinuierlich in Längsrichtung der U-Profileinheit (24) gelagert sind, wobei
- die U-Profileinheit (24) zumindest an einer ihrer Flanschaußenseiten eine Anschlusseinheit (26), die als im wesentlichen parallel zur Längsachse der U-Profileinheit (24) verlaufende durchgehende Nuteinheit (26), insbesondere T-Nuteinheit, ausgebildet ist, zum Anschließen der Messwertgebereinheit (20) und/oder der Magnetschaltereinheit (22) besitzt.
**dadurch gekennzeichnet**, dass
- Befestigungseinheiten (30, ..., 38) für die Messwertgebereinheit (20) und die Magnetschaltereinheit (22) vorhanden sind, die eine Anordnung der Messwertgebereinheit (20) und der Magnetschaltereinheit (22) mit unterschiedlichem Abstand zur Bypassrohreinheit (12) erlauben, im Extremfall bis an die Wandung der Bypassrohreinheit (12), wobei
- der Anschluss der Befestigungseinheiten (30, ...) an die Nuteinheit (26) mittels einer Nutenstein (40)-Schraubverbindung (42,48) erfolgt und
- die Befestigungseinheiten (30, ...) eine durchgehende Bohrung (46) zum Einführen einer Befestigungsschraube (48) aufweist.

2. Niveaumessvorrichtung (10) zum Messen des Füllstandes von Behältern, die mit flüssigem oder flüssigkeitsähnlichen Medien gefüllt sind, mit
- einer Bypassrohreinheit (12), die mit dem Inneren des Behältnis kommunizierend in Verbindung steht,
- einer in der Bypassrohreinheit (12) gleitend vorhandener Schwimmereinheit (14) mit einem Permanentmagneten,
- einer Magnet-Niveauanzeige (16) mit von dem Permanentmagneten beeinflußbaren drehbaren Magnetrollen (18),
- einer Messwertgebereinheit (21) für das Niveau des Mediums, wobei die Messwertgebereinheit (21) eine Messkette (23) mit Reed-Kontakten (98) und Widerständen (99) aufweist,
- zumindest einer Magnetschaltereinheit (22) und
- einer U-Profileinheit (24), die an der Bypassrohreinheit (12) befestigt ist und in deren Profilinnenraum, d.h. Raum zwischen den gegenüberliegenden Flanschinnenseiten der U-Profileinheit (24), die Magnetrollen (18) kontinuierlich in Längsrichtung der U-Profileinheit (24) gelagert sind, wobei
- die U-Profileinheit (24) zumindest an einer ihrer Flanschaußenseiten eine Anschlusseinheit (26), die als im wesentlichen parallel zur Längsachse der U-Profileinheit (24) verlaufende durchgehende Nuteinheit (26), insbesondere T-Nuteinheit, ausgebildet ist, zum Anschließen der Messwertgebereinheit (20) und/oder der Magnetschaltereinheit (22) besitzt.
**dadurch gekennzeichnet**, dass
- Befestigungseinheiten (30, ..., 38) für die Magnetschaltereinheit (22) vorhanden sind, die eine Anordnung der Magnetschaltereinheit (22) mit unterschiedlichem Abstand zur Bypassrohreinheit (12) erlauben, im Extremfall bis an die Wandung der Bypassrohreinheit (12), wobei
- der Anschluss der Befestigungseinheiten (30, ...) an die Nuteinheit (26) mittels einer Nutenstein (40)-Schraubverbindung (42,48) erfolgt und
- die Befestigungseinheiten (30, ...) eine durchgehende Bohrung (46) zum Einführen einer Befestigungsschraube (48) aufweist,
- die Messwertgebereinheit (21) mit ihrer Messkette (23) zumindest teilweise direkt innerhalb der Nuteinheit (26) angeordnet ist,
- die Messkette (23) von einer Umhüllungseinheit, insbesondere Schrumpfschlaucheinheit (92) umhüllt ist und/oder
- die nach außen offene durchgehende Nuteinheit (26) mittels einer Abdeckeinheit (94) verschlossen ist.

3. Vorrichtung und Anspruch 1 oder 2,
**dadurch gekennzeichnet**, dass
- die Anschlusseinrichtung (26) zum Anschließen von Befestigungseinheiten (30, ..., 38) auf beiden Flanschaußenseiten der U-Profileinheit (24) vorhanden sind.

4. Vorrichtung nach Anspruch 1 oder 3,
**dadurch gekennzeichnet**, dass
- die Befestigungseinheit (30.1, 32) eine durchgehende Ausnehmung (44) zur Befestigung der Magnetschaltereinheit (22) oder zur Befestigung der Messwertgebereinheit (20) besitzt.

5. Vorrichtung nach Anspruch 1, 3 oder 4,
**dadurch gekennzeichnet**, dass
- die Messwertgebereinheit (20, 20.1) und/oder Magnetschaltereinheit (22) mit der Befestigungseinheit (34,36) verschweißt ist.

6. Vorrichtung nach einem oder mehreren der vorstehenden Ansprüchen,
**dadurch gekennzeichnet**, dass
- zwischen der Anschlusseinheit (26) und der Befestigungseinheit (30.1) eine zweite Befestigungseinheit (30.2) angeordnet ist.

7. Vorrichtung nach Anspruch 6,
**dadurch gekennzeichnet**, dass
- die zweite Befestigungseinheit (30.2) einen im Wesentlichen L-förmigen Querschnitt besitzt.

8. Vorrichtung nach einem oder mehreren der vorstehenden Ansprüche,
**gekennzeichnet durch**
- eine Spannbandeinheit (50), die um die Bypassrohreinheit (12) herumgeführt ist und in der Anschlusseinrichtung (26) der U-Profileinheit (24) verankert ist.

9. Vorrichtung nach einem oder mehreren der vorstehenden Ansprüche,
**dadurch gekennzeichnet**, dass
- die Magnetschaltereinheit ein bistabiles Schaltverhalten aufweist.

## Claims

1. Level-measuring apparatus (10) for measuring the filling level of containers which are filled with liquid media or media similar to liquids, having
- a bypass-tube unit (12) which communicates with the interior of the vessel,
- a float unit (14) which slides in the bypass-tube unit (12) and has a permanent magnet,
- a magnetic level indicator (16) with rotatable magnetic rollers (18) which can be influenced by the permanent magnet,
- a measured-value transmitter unit (20) for the level of the medium,
- at least one magnet-operated switch unit (22) and
- a U-profile unit (24) which is secured on the bypass-tube unit (12) and in the interior of which, i.e. the space between the opposite inner sides of the flanges of the U-profile unit (24), the magnetic rollers (18) are mounted continuously in the longitudinal direction of the U-profile unit (24),
- the U-profile unit (24) having, at least on one of the outer sides of its flanges, a connection unit (26) which is designed as a continuous slot unit (26), in particular a T-slot unit, which extends essentially parallel to the longitudinal axis of the U-profile unit (24) and is used to connect the measured-value transmitter unit (20) and/or the magnet-operated switch unit (22),
characterized in that
- there are fastening units (30,...,38) for the measured-value transmitter unit (20) and the magnet-operated switch unit (22) which allow the measured-value transmitter unit (20) and the magnet-operated switch unit (22) to be arranged at different distances from the bypass-tube unit (12) and, in the extreme case, up to the wall of the bypass-tube unit (12),
- the fastening units (30,...) are connected to the slot unit (26) by means of a sliding block (40) screw connection (42, 48) and
- the fastening units (30,...) have a through hole (46) for the introduction of a fastening screw (48).

2. Level-measuring apparatus (10) for measuring the filling level of containers which are filled with liquid media or media similar to liquids, having
- a bypass-tube unit (12) which communicates with the interior of the vessel,
- a float unit (14) which slides in the bypass-tube unit (12) and has a permanent magnet,
- a magnetic level indicator (16) with rotatable magnetic rollers (18) which can be influenced by the permanent magnet,
- a measured-value transmitter unit (21) for the level of the medium, the measured-value transmitter unit (21) having a measuring chain (23) with reed contacts (98) and resistors (99),
- at least one magnet-operated switch unit (22) and
- a U-profile unit (24) which is secured on the bypass-tube unit (12) and in the interior of which, i.e. the space between the opposite inner sides of the flanges of the U-profile unit (24), the magnetic rollers (18) are mounted continuously in the longitudinal direction of the U-profile unit (24),
- the U-profile unit (24) having, at least on one of the outer sides of its flanges, a connection unit (26) which is designed as a continuous slot unit (26), in particular a T-slot unit, which extends essentially parallel to the longitudinal axis of the U-profile unit (24) and is used to connect the measured-value transmitter unit (20) and/or the magnet-operated switch unit (22),
characterized in that
- there are fastening units (30,...,38) for the magnet-operated switch unit (22) which allow the magnet-operated switch unit (22) to be arranged at different distances from the bypass-tube unit (12) and, in the extreme case, up to the wall of the bypass-tube unit (12),
- the fastening units (30,...) being connected to the slot unit (26) by means of a sliding block (40) screw connection (42, 48) and
- the fastening units (30,...) having a through hole (46) for the introduction of a fastening screw (48),
- the measured-value transmitter unit (21) with its measuring chain (23) being arranged at least in part directly within the slot unit (26),
- the measuring chain (23) is enveloped by an envelope unit, in particular a shrink-on sleeve unit (92) and/or
- the continuous slot unit (26) open towards the outside is closed off by means of a cover unit (94).

3. Apparatus and [sic] Claim 1 or 2,
characterized in that
- there are the connecting device [sic] (26) for connecting fastening units (30,..., 38) on the outer sides of both of the flanges of the U-profile unit (24).

4. Apparatus according to Claim 1 or 3,
characterized in that
- the fastening unit (30.1, 32) has a continuous aperture (44) for fastening the magnet-operated switch unit (22) or for fastening the measured-value transmitter unit (20).

5. Apparatus according to Claim 1, 3 or 4,
characterized in that
- the measured-value transmitter unit (20, 20.1) and/or the magnet-operated switch unit (22) is/are welded to the fastening unit (34, 36).

6. Apparatus according to one or more of the preceding claims,
characterized in that
- a second fastening unit (30.2) is arranged between the connection unit (26) and the fastening unit (30.1).

7. Apparatus according to Claim 6,
characterized in that
- the second fastening unit (30.2) has an essentially L-shaped cross section.

8. Apparatus according to one or more of the preceding claims, characterized by
- a strap unit (50) which is passed around the bypass-tube unit (12) and is anchored in the connection device (26) of the U-profile unit (24).

9. Apparatus according to one or more of the preceding claims, characterized in that
- the magnet-operated switch unit has bistable switching behaviour.

## Revendications

1. Dispositif de mesure de niveau (10) pour mesurer le niveau de remplissage de réservoirs remplis de milieux liquides ou semblables à des liquides, comprenant
- une unité à tube de dérivation (12) qui est en liaison de communication avec l'intérieur du réservoir,
- une unité à flotteur (14) disposée glissante dans l'unité à tube de dérivation (12) et possédant un aimant permanent,
- un indicateur de niveau magnétique (16) comportant des rouleaux magnétiques (18) rotatifs, sur lesquels peut agir l'aimant permanent,
- une unité génératrice de valeurs de mesure (20) pour le niveau du milieu,
- au moins une unité à commutateur magnétique (22) et
- une unité à profil en U (24) qui est fixée à l'unité à tube de dérivation (12) et dans l'espace intérieur du profil de laquelle, c'est-à-dire l'espace entre les côtés intérieurs qui se font face des branches de l'unité à profil en U (24), les rouleaux magnétiques (18) sont montés de façon continue les uns à la suite des autres dans la direction longitudinale de l'unité à profil en U (24),
- l'unité à profil en U (24) possédant, au moins sur l'un des côtés extérieurs de ses branches, une unité de raccordement (26) réalisée comme une unité à rainure (26), en particulier une unité à rainure en T, s'étendant de façon continue pour l'essentiel parallèlement à l'axe longitudinal de l'unité à profil en U (24) et servant au raccordement de l'unité génératrice de valeurs de mesure (20) et/ou de l'unité à commutateur magnétique (22),
**caractérisé en ce que**
- des unités de fixation (30, ..., 38) sont présentes pour l'unité génératrice de valeurs de mesure (20) et l'unité à commutateur magnétique (22), unités de fixation qui autorisent une disposition de l'unité génératrice de valeurs de mesure (20) et de l'unité à commutateur magnétique (22) à des distances différentes de l'unité à tube de dérivation (12), dans le cas extrême jusqu'à la paroi de l'unité à tube de dérivation (12),
- le raccordement des unités de fixation (30, ...) à l'unité à rainure (26) s'effectuant au moyen d'une liaison vissée (42, 48) avec un coulisseau à rainure (40) et
- les unités de fixation (30, ...) présentant un perçage traversant (46) pour l'introduction d'une vis de fixation (48).

2. Dispositif de mesure de niveau (10) pour mesurer le niveau de remplissage de réservoirs remplis de milieux liquides ou semblables à des liquides, comprenant
- une unité à tube de dérivation (12) qui est en liaison de communication avec l'intérieur du réservoir,
- une unité à flotteur (14) disposée glissante dans l'unité à tube de dérivation (12) et possédant un aimant permanent,
- un indicateur de niveau magnétique (16) comportant des rouleaux magnétiques (18) rotatifs, sur lesquels peut agir l'aimant permanent,
- une unité génératrice de valeurs de mesure (20) pour le niveau du milieu, l'unité génératrice de valeurs de mesure (21) présentant une chaîne de mesure (23) avec des contacts à lames vibrantes (98) et des résistances (99),
- au moins une unité à commutateur magnétique (22) et
- une unité à profil en U (24) qui est fixée à l'unité à tube de dérivation (12) et dans l'espace intérieur du profil de laquelle, c'est-à-dire l'espace entre les côtés intérieurs qui se font face des branches de l'unité à profil en U (24), les rouleaux magnétiques (18) sont montés de façon continue les uns à la suite des autres dans la direction longitudinale de l'unité à profil en U (24),
- l'unité à profil en U (24) possédant, au moins sur l'un des côtés extérieurs de ses branches, une unité de raccordement (26) réalisée comme une unité à rainure (26), en particulier une unité à rainure en T, s'étendant de façon continue pour l'essentiel parallèlement à l'axe longitudinal de l'unité à profil en U (24) et servant au raccordement de l'unité génératrice de valeurs de mesure (20) et/ou de l'unité à commutateur magnétique (22),
**caractérisé en ce que**
- des unités de fixation (30, ..., 38) sont présentes pour l'unité à commutateur magnétique (22), qui autorisent une disposition de l'unité à commutateur magnétique (22) à des distances différentes de l'unité à tube de dérivation (12), dans le cas extrême jusqu'à la paroi de l'unité à tube de dérivation (12),
- le raccordement des unités de fixation (30, ...) à l'unité à rainure (26) s'effectuant au moyen d'une liaison vissée (42, 48) avec un coulisseau à rainure (40) et
- les unités de fixation (30, ...) présentant un perçage traversant (46) pour l'introduction d'une vis de fixation (48),
- l'unité génératrice de valeurs de mesure (21) étant disposée au moins en partie directement à l'intérieur de l'unité à rainure (26) par sa chaîne de mesure (23),
- la chaîne de mesure (23) étant enveloppée d'une unité d'enveloppe, en particulier d'une gaine thermorétractée (92) et/ou
- l'unité à rainure (26) continue, ouverte vers l'extérieur, étant fermée au moyen d'une unité de recouvrement (94).

3. Dispositif selon la revendication 1 ou 2, caractérisé en ce qu'un dispositif de raccordement (26) pour le raccordement d'unités de fixation (30, ..., 38) est présent sur les deux côtés extérieurs des branches de l'unité à profil en U (24).

4. Dispositif selon la revendication 1 ou 3, caractérisé en ce que l'unité de fixation (30.1, 32) possède un évidement traversant (44) pour la fixation de l'unité à commutateur magnétique (22) ou pour la fixation de l'unité génératrice de valeurs de mesure (20).

5. Dispositif selon la revendication 1, 3 ou 4, caractérisé en ce que l'unité génératrice de valeurs de mesure (20, 20.1) et/ou l'unité à commutateur magnétique (22) est soudée à l'unité de fixation (34, 36).

6. Dispositif selon une ou plusieurs des revendications précédentes, caractérisé en ce qu'une seconde unité de fixation (30.2) est disposée entre l'unité de raccordement (26) et l'unité de fixation (30.1).

7. Dispositif selon la revendication 6, caractérisé en ce que la seconde unité de fixation (30.2) possède une section droite essentiellement en L.

8. Dispositif selon une ou plusieurs des revendications précédentes, caractérisé par une unité à bande de serrage (50) disposée autour de l'unité à tube de dérivation (12) et ancrée dans le dispositif de raccordement (26) de l'unité à profil en U (24).

9. Dispositif selon une ou plusieurs des revendications précédentes, caractérisé en ce que l'unité à commutateur magnétique présente un comportement de commutation bistable.
